# EUROPEAN PATENT APPLICATION

(11) **EP 4 596 303 A2**
(43) Date of publication of application: **06.08.2025**
(21) Application number: 24223367.4
(22) Date of filing: 27.12.2024
(51) Int. Cl.: B60L 53/122, B60L 53/126, B60L 53/36, B60L 53/38, H02J 50/12, H02J 50/40, H02J 50/50, H02J 50/80, B60L 53/12

(54) **WIRELESS CHARGING SYSTEM AND OPERATING METHOD FOR WIRELESS CHARGING SYSTEM**

(30) Priority: 10.01.2024 TW 113101127
(71) Applicant: APh ePower Co., Ltd., Kaohsiung City 821 (TW)
(72) Inventor: SU, Hsiu-Hsien, 821 Kaohsiung City (TW); TZENG, Yun-Chi, 821 Kaohsiung City (TW); LEE, Tsung-Shiun, 821 Kaohsiung City (TW)
(74) Representative: Becker, Eberhard

(57) **Abstract**

A wireless charging system (10, 100) and an operating method for the wireless charging system (10, 100) are provided. The wireless charging system (10, 100) includes a power supply device (11_1-11_3, 110, 210), a first transmission coil, a second transmission coil, an electric auxiliary vehicle (EV, EV1-EV9), and a processing device (130). The power supply device (11_1-11_3, 110, 210) provides a power source (PP, PP1-PP3). The first transmission coil transmits a first wireless electric energy (PW1) to a first parking position and a second parking position in a wireless transmission manner according to the power source (PP, PP1-PP3). The electric auxiliary vehicle (EV, EV1-EV9) includes a vehicle coil circuit (CC). The processing device (130) guides the electric auxiliary vehicle (EV, EV1-EV9) to stop at the second parking position. The processing device (130) uses the vehicle coil circuit (CC) to transmit a coupled electric energy (PWC, PWC1, PWC2) to the second transmission coil, so that the second transmission coil uses the coupled electric energy (PWC, PWC1, PWC2) to transmit a second wireless electric energy (PW2) to the third parking position in the wireless transmission manner.

## Description

### BACKGROUND

### Technical Field

The disclosure relates to a charging system, and more particularly, to a wireless charging system and an operating method for the wireless charging system

### Description of Related Art

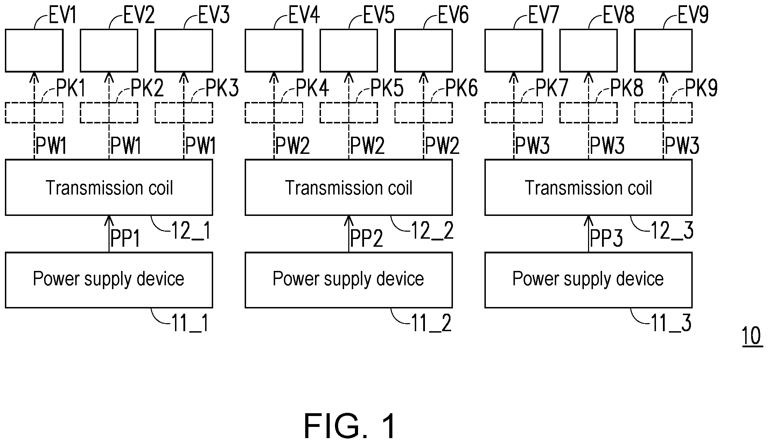

FIG. 1 is a schematic diagram of a current wireless charging system. Generally speaking, a wireless charging system 10 for an electric auxiliary vehicle includes power supply devices 11_1 to 11_3 and transmission coils 12_1 to 12_3. The transmission coil 12_1 receives a power source PP1 of the power supply device 11_1 and provides a first wireless electric energy PW1, and uses the first wireless electric energy PW1 to wirelessly charge electric auxiliary vehicles EV1 to EV3 located at parking positions PK1 to PK3. The transmission coil 12_2 receives a power source PP2 of the power supply device 11_2 and provides a second wireless electric energy PW2, and uses the second wireless electric energy PW2 to wirelessly charge electric auxiliary vehicles EV4 to EV6 located at parking positions PK4 to PK6. The transmission coil 12_3 receives a power source PP3 of the power supply device 11_3 and provides a third wireless electric energy PW3, and uses the third wireless electric energy PW3 to wirelessly charge electric auxiliary vehicles EV7 to EV9 located at parking positions PK7 to PK9.

However, when the power supply device 11_2 is abnormal and may not provide the power source PP2, the wireless charging system 10 cannot wirelessly charge the electric auxiliary vehicles EV4 to EV6. The wireless charging system 10 may not use the power supply devices 11_1 and 11_3 to wirelessly charge the electric auxiliary vehicles EV4 to EV6.

### SUMMARY

The disclosure provides a wireless charging system and an operating method for the wireless charging system, which may use a single power source to provide a wireless electric energy to multiple parking positions corresponding to different transmission coils.

A wireless charging system in the disclosure includes a power supply device, a first transmission coil, a second transmission coil, an electric auxiliary vehicle, and a processing device. The power supply device provides a power source. The first transmission coil is electrically connected to the power supply device. The first transmission coil transmits a first wireless electric energy to a first parking position and a second parking position in a wireless transmission manner according to the power source. The electric auxiliary vehicle includes a vehicle coil circuit. The processing device communicates with the electric auxiliary vehicle to guide the electric auxiliary vehicle to stop at the second parking position. The processing device uses the vehicle coil circuit to transmit a coupled electric energy corresponding to the first wireless electric energy to the second transmission coil in a wireless induction manner, so that the second transmission coil uses the coupled electric energy to transmit a second wireless electric energy to a third parking position in the wireless transmission manner.

An operating method in the disclosure is suitable for a wireless charging system. The wireless charging system includes a first transmission coil, a second transmission coil, an electric auxiliary vehicle, and a processing device. The electric auxiliary vehicle includes a vehicle coil circuit. The operating method includes the following. The first transmission coil receives a power source, and transmits a first wireless electric energy to a first parking position and a second parking position in a wireless transmission manner according to the power source. The processing device guides the electric auxiliary vehicle to stop at the second parking position. The processing device uses the vehicle coil circuit to transmit a coupled electric energy corresponding to the first wireless electric energy to the second transmission coil in a wireless induction manner. The second transmission coil uses the coupled electric energy to transmit a second wireless electric energy to a third parking position in the wireless transmission manner.

Based on the above, the wireless charging system may use the vehicle coil circuit in the electric auxiliary vehicle to receive the first wireless electric energy, and transmit the coupled electric energy corresponding to the first wireless electric energy to the second transmission coil. Therefore, the second transmission coil may use the coupled electric energy to the second wireless electric energy to the third parking position in the wireless transmission manner. In this way, the wireless charging system may use one single power source to provide the wireless electric energies corresponding to the parking positions in different transmission coils.

### BRIEF DESCRIPTION OF THE DRAWINGS

FIG. 1 is a schematic diagram of a current wireless charging system.
FIG. 2 is a schematic diagram of a wireless charging system according to an embodiment of the disclosure.
FIG. 3 is a schematic diagram of an operation of a power supply device according to an embodiment of the disclosure.
FIG. 4 is a schematic diagram of a power supply device according to an embodiment of the disclosure.
FIG. 5 is a schematic circuit diagram of an energy storage battery and a vehicle coil circuit according to an embodiment of the disclosure.
FIG. 6 is a schematic circuit diagram of an energy storage battery and a vehicle coil circuit according to an embodiment of the disclosure.
FIG. 7 is a schematic diagram of a vehicle coil and a transmission coil according to an embodiment of the disclosure.
FIG. 8 is a schematic diagram of a vehicle coil and a transmission coil according to an embodiment of the disclosure.
FIG. 9 is a flow chart of an operating method according to an embodiment of the disclosure.

### DETAILED DESCRIPTION OF DISCLOSED EMBODIMENTS

Some embodiments of the disclosure will be described in detail with reference to the accompanying drawings. For reference numerals cited in the following descriptions, the same reference numerals appearing in different drawings are regarded as the same or similar components. The embodiments are only a part of the disclosure and do not disclose all possible implementations of the disclosure. More precisely, the embodiments are merely examples of the device and the method.

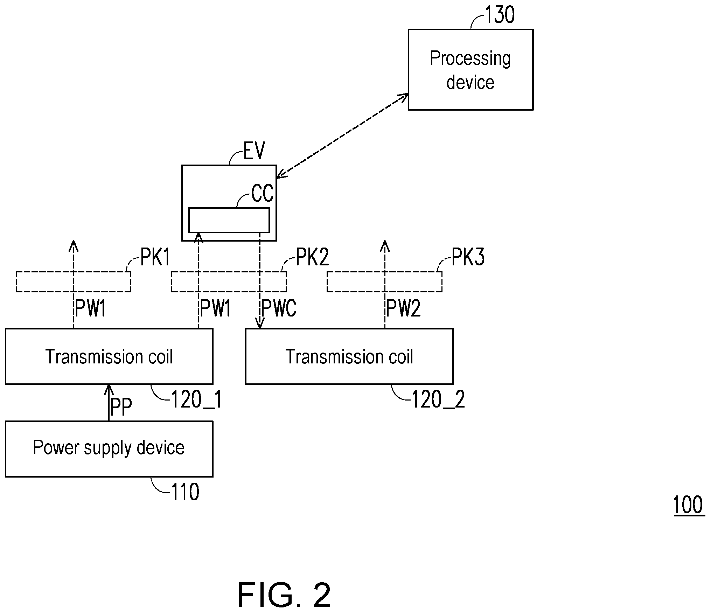

Referring to FIG. 2, FIG. 2 is a schematic diagram of a wireless charging system according to an embodiment of the disclosure. In this embodiment, a wireless charging system 100 includes a power supply device 110, transmission coils 120_1 and 120_2, an electric auxiliary vehicle EV, and a processing device 130. The power supply device 110 provides a power source PP. The transmission coil 120_1 is electrically connected to the power supply device 110. The power supply device 110 may be regarded as a power supply device corresponding to the transmission coil 120_1. The transmission coil 120_1 receives the power source PP. The transmission coil 120_1 transmits the first wireless electric energy PW1 to the parking position PK1 and the parking position PK2 in a wireless transmission manner according to the power source PP. The electric auxiliary vehicle EV includes a vehicle coil circuit CC. The electric auxiliary vehicle EV may be an electric auxiliary wheelchair, an electric auxiliary bicycle, an electric auxiliary scooter, or an electric motorcycle (but the disclosure is not limited thereto).

In this embodiment, the processing device 130 communicates with the electric auxiliary vehicle EV to guide the electric auxiliary vehicle EV to stop at the parking position PK2. The processing device 130 uses, for example, road sign information in a parking lot or a screen in the electric auxiliary vehicle EV to guide the electric auxiliary vehicle EV. After the electric auxiliary vehicle EV stops at the parking position PK2, the processing device 130 controls the electric auxiliary vehicle EV. The processing device 130 uses the vehicle coil circuit CC to transmit a coupled electric energy PWC corresponding to the first wireless electric energy PW1 to the transmission coil 120_2 in a wireless induction manner. Therefore, the transmission coil 120_2 may use the coupled electric energy PWC to transmit the second wireless electric energy PW2 to the parking position PK3 in the wireless transmission manner.

It is worth mentioning here that the wireless charging system 100 may use the vehicle coil circuit CC in the electric auxiliary vehicle EV to receive the first wireless electric energy PW1 from the transmission coil 120_1. The vehicle coil circuit CC transmits the coupled electric energy PWC corresponding to the first wireless electric energy PW1 to the transmission coil 120_2. Therefore, the transmission coil 120_2 may use the coupled electric energy PWC to transmit the second wireless electric energy PW2 to the parking position PK3 in the wireless transmission manner. In this way, the wireless charging system 100 may use one single power source PP to provide wireless electric energies corresponding to multiple parking positions with different transmission coils.

In this embodiment, an electric energy transmission range of the parking position PK2 partially overlaps an electric energy transmission range of the transmission coils 120_1 and 120_2. Therefore, when the electric auxiliary vehicle EV stops at the parking position PK2, the vehicle coil circuit CC may be allowed to provide the coupled electric energy PWC to the transmission coil 120_2. Therefore, the transmission coil 120_2 may generate the second wireless electric energy PW2 according to the coupled electric energy PWC, and transmit the second wireless electric energy PW2 to the parking position PK3. The electric auxiliary vehicle (not shown) stopping at the parking position PK3 may be charged.

Compared to the wireless charging system 10 shown in FIG. 1, the wireless charging system 100 may reduce the number of power supply devices 110. Therefore, costs of the wireless charging system 100 may be reduced.

In some embodiments, the wireless charging system 100 further includes a power supply device (not shown) corresponding to the transmission coil 120_2. The power supply device corresponding to the transmission coil 120_2 may provide the power source to the transmission coil 120_2. When an abnormality occurs in the power supply device corresponding to the transmission coil 120_2, based on the vehicle coil circuit CC, the power supply device 110 may still maintain a transmission function of the wireless electric energy of the transmission coils 120_1 and 120_2.

For ease of description, in this embodiment, the two transmission coils 120_1 and 120_2 are taken as an example. There may be multiple transmission coils in the disclosure, and are not limited to this embodiment.

In this embodiment, the processing device 130 may be an electronic device with computing functions such as any type of server, desktop computer, a notebook computer, and smart phone. The processing device 130 may communicate with the electric auxiliary vehicle EV in a wired communication manner or a wireless communication manner that is well known to those skilled in the art.

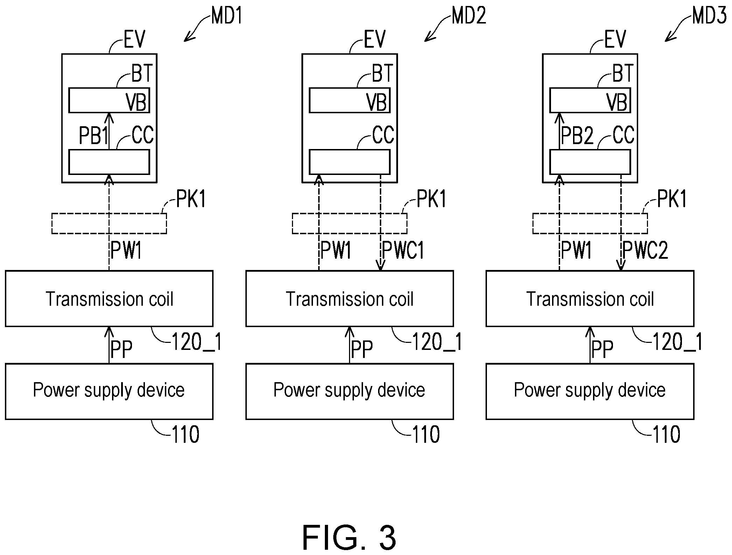

Referring to both FIGs. 2 and 3, FIG. 3 is a schematic diagram of an operation of a power supply device according to an embodiment of the disclosure. In this embodiment, the processing device 130 guides the electric auxiliary vehicle EV to stop at the parking position PK1. The processing device 130 communicates with the electric auxiliary vehicle EV to receive a battery power VB of the electric auxiliary vehicle EV, and controls the electric auxiliary vehicle EV to perform one of a charging mode MD1, an enhanced coupling mode MD2, and a charging and enhanced coupling mode MD3 according to the battery power VB.

In this embodiment, the electric auxiliary vehicle EV includes an energy storage battery BT and the vehicle coil circuit CC. The energy storage battery BT is electrically connected to the vehicle coil circuit CC. When the battery power VB is lower than or equal to a power threshold, the processing device 130 controls the electric auxiliary vehicle EV to perform the charging mode MD1. In the charging mode MD1, the vehicle coil circuit CC of the electric auxiliary vehicle EV receives the first wireless electric energy PW1 from the transmission coil 120_1, converts the first wireless electric energy PW1 into a battery electric energy PB1, and uses the battery electric energy PB1 to charge the energy storage battery BT.

For example, the power threshold is equal to 98% of a state of charge (SOC) of the energy storage battery BT (but the disclosure is not limited thereto). The power threshold may be set according to requirements of the electric auxiliary vehicle EV. Therefore, the processing device 130 may also receive a power threshold of the electric auxiliary vehicle EV.

When the battery power VB is higher than the power threshold, the processing device 130 controls the electric auxiliary vehicle EV to perform the enhanced coupling mode MD2. In the enhanced coupling mode MD2, the vehicle coil circuit CC of the electric auxiliary vehicle EV receives the first wireless electric energy PW1 from the transmission coil 120_1, uses the first wireless electric energy PW1 to generate a coupled electric energy PWC1, and feeds the coupled electric energy PWC1 back to the transmission coil 120_1.

In this embodiment, in the enhanced coupling mode MD2, the vehicle coil circuit CC does not charge the energy storage battery BT, but uses the coupled electric energy PWC1 to enhance the first wireless electric energy PW.

When the battery power VB is higher than the power threshold, the processing device 130 controls the electric auxiliary vehicle EV to perform the charging and enhanced coupling mode MD3. In the charging and enhanced coupling mode MD3, the vehicle coil circuit CC of the electric auxiliary vehicle EV receives the first wireless electric energy PW1 from the transmission coil 120_1, uses the first wireless electric energy PW1 to generate the coupled electric energy PWC1, converts the first wireless electric energy PW1 into a battery electric energy PB2, and uses the battery electric energy PB2 to charge the energy storage battery BT. In addition, the vehicle coil circuit CC further uses the first wireless electric energy PW1 to generate a coupled electric energy PWC2, and feeds the coupled electric energy PWC2 back to the transmission coil 120_1.

The power of the battery electric energy PB2 is lower than the power of the battery electric energy PB1. The power of the coupled electric energy PWC2 is lower than the power of the coupled electric energy PWC1.

In this embodiment, the treatment device 130 may provide a discount according to a time length of the electric auxiliary vehicle EV performing the enhanced coupling mode MD2 or the charging and enhanced coupling mode MD3. The discount is, for example, a discount or reduction in parking fees.

In addition, the processing device 130 further determines the parking position of the electric auxiliary vehicle EV according to the battery power VB. For example, when the battery power VB is higher than the power threshold, the processing device 130 may guide the electric auxiliary vehicle EV to stop at the parking position PK2. The processing device 130 controls the electric auxiliary vehicle EV to perform one of the charging mode MD1, the enhanced coupling mode MD2, and the charging and enhanced coupling mode MD3. When one of the enhanced coupling mode MD2 and the charging and enhanced coupling mode MD3 is performed, the electric auxiliary vehicle EV stopping at the parking position PK2 may also enjoy the discount.

In this embodiment, the energy storage battery BT may be implemented by an aluminum-ion battery, but the disclosure is not limited thereto.

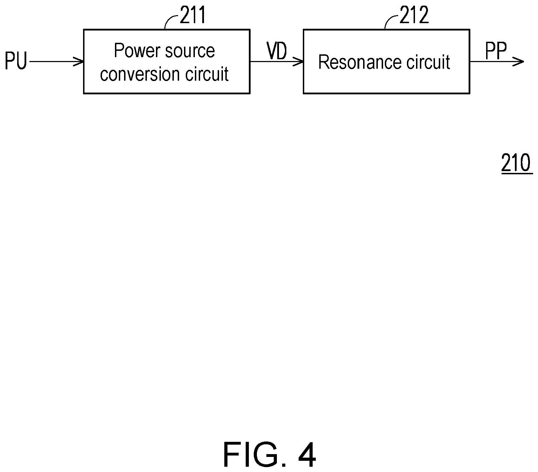

Referring to both FIGs. 2 and 4, FIG. 4 is a schematic diagram of a power supply device according to an embodiment of the disclosure. In this embodiment, a power supply device 210 includes a power source conversion circuit 211 and a resonance circuit 212. The power source conversion circuit 211 receives an input power source PU, and converts the input power source PU into a high-frequency square wave AC signal VD. For example, when the input power source PU is a DC power source, the power source conversion circuit 211 may be used as a transducer circuit. When the input power source PU is an AC power source, the power source conversion circuit 211 may be used as a rectifier and transducer circuit.

In this embodiment, the resonance circuit 212 receives the high-frequency square wave AC signal VD, and provides the power source PP according to the high-frequency square wave AC signal VD. The resonance circuit 212 provides the power source PP to the transmission coil 120_1.

In this embodiment, designs of the resonance circuit 212 and the transmission coil 120_1 may determine a frequency of the first wireless electric energy PW1.

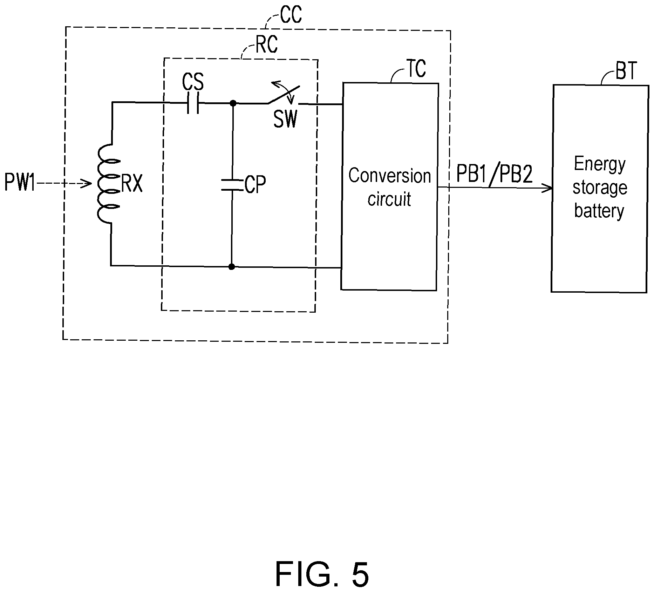

Referring to both FIGs. 3 and 5, FIG. 5 is a schematic circuit diagram of an energy storage battery and a vehicle coil circuit according to an embodiment of the disclosure. In this embodiment, the vehicle coil circuit CC of the electric auxiliary vehicle EV includes a vehicle coil RX, a resonance circuit RC, and a conversion circuit TC. The vehicle coil RX receives the first wireless electric energy PW1. The resonance circuit RC is electrically connected to the vehicle coil RX. The conversion circuit TC is electrically connected to the resonance circuit RC and the energy storage battery BT. In the charging mode MD1, the conversion circuit TC receives the first wireless electric energy PW1 through the resonance circuit RC and the vehicle coil RX, converts the first wireless electric energy PW1 into the battery energy PB1, and charges the energy storage battery BT according to the battery energy PB1.

In the charging mode MD1, the resonance circuit RC, the vehicle coil RX, and the conversion circuit TC jointly form a first loop. In the charging mode MD1, a resonant frequency of the first loop is equal to the frequency of the first wireless electric energy PW1. In the enhanced coupling mode MD2, the resonance circuit RC and the vehicle coil RX jointly form a second loop. In the enhanced coupling mode MD2, a resonant frequency of the second loop is equal to the frequency of the first wireless electric energy PW1.

Furthermore, in this embodiment, the resonance circuit RC includes a variable capacitor CS, a switch SW, and a capacitor CP. A first end of the variable capacitor CS is electrically connected to a first end of the vehicle coil RX. A first end of the switch SW is electrically connected to a second end of the variable capacitor CS. A second end of the switch SW is electrically connected to the conversion circuit TC. The capacitor CP is electrically connected between the second end of the variable capacitor CS and a second end of the vehicle coil RX.

In the charging mode MD1, the switch SW is turned on. The variable capacitor CS, the capacitor CP, the vehicle coil RX, and conversion circuit TC jointly form the first loop. Therefore, a capacitance value of the variable capacitor CS, a capacitance value of the capacitor CP, and an inductance value of the vehicle coil RX determine the resonant frequency of the first loop. The resonant frequency of the first loop is equal to the frequency of the first wireless electric energy PW1.

In the enhanced coupling mode MD2, the switch SW is turned off. The variable capacitor CS, the capacitor CP, and the vehicle coil RX jointly form the second loop. Therefore, the capacitance value of the variable capacitor CS, the capacitance value of the capacitor CP, and the inductance value of the vehicle coil RX determine the resonant frequency of the second loop. The resonant frequency of the second loop is equal to the frequency of the first wireless electric energy PW1.

In the charging and enhanced coupling mode MD3, the capacitance value of the variable capacitor CS is adjusted. The resonant frequency of the first loop is offset. Therefore, the resonant frequency of the first loop is not equal to the frequency of the first wireless electric energy PW. For example, in the charging and enhanced coupling mode MD3, the greater a difference between the resonant frequency of the first loop and the frequency of the first wireless electric energy PW1, the smaller the power of the coupled electric energy PWC2. The smaller the difference between the resonant frequency of the first loop and the frequency of the first wireless electric energy PW1, the greater the power of the coupled electric energy PWC2.

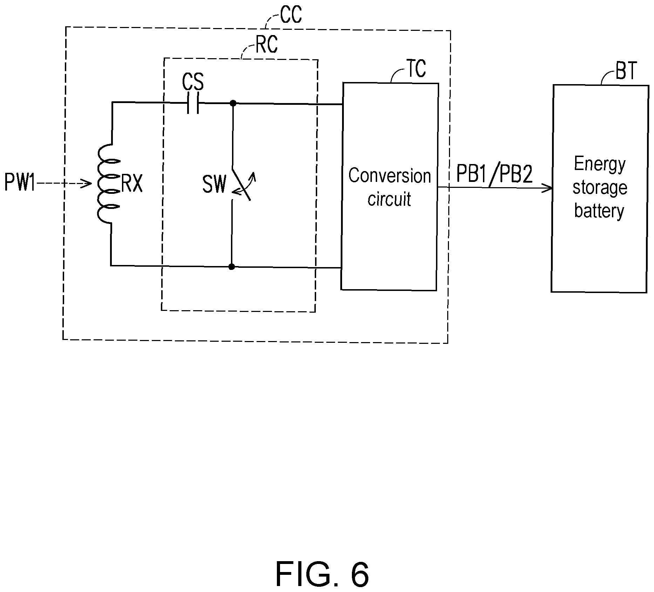

Referring to both FIGs. 3 and 6, FIG. 6 is a schematic circuit diagram of an energy storage battery and a vehicle coil circuit according to an embodiment of the disclosure. In this embodiment, the vehicle coil circuit CC of the electric auxiliary vehicle EV includes the vehicle coil RX, the resonance circuit RC, and the conversion circuit TC. The vehicle coil RX receives the first wireless electric energy PW1. The resonance circuit RC is electrically connected to the vehicle coil RX. The conversion circuit TC is electrically connected to the resonance circuit RC and the energy storage battery BT.

In this embodiment, the resonance circuit RC includes the variable capacitor CS and the switch SW. The first end of the variable capacitor CS is electrically connected to the first end of the vehicle coil RX. The second end of the variable capacitor CS is electrically connected to the conversion circuit TC. The first end of the switch SW is electrically connected to the second end of the variable capacitor CS. A second end of switch SW is electrically connected to the second end of the vehicle coil RX.

In charging mode MD1, the switch SW is turned off. The variable capacitor CS, the vehicle coil RX, and the conversion circuit TC form the first loop. The capacitance value of the variable capacitor CS and the inductance value of the vehicle coil RX determine the resonant frequency of the first loop. The resonant frequency of the first loop is equal to the frequency of the first wireless electric energy PW1.

In the enhanced coupling mode MD2, the switch SW is turned on. The variable capacitor CS and the vehicle coil RX form the second loop. Therefore, the capacitance value of the variable capacitor CS and the inductance value of the vehicle coil RX determine the resonant frequency of the second loop. The resonant frequency of the second loop is equal to the frequency of the first wireless electric energy PW1.

In charging and enhanced coupling mode MD3, the capacitance value of the variable capacitor CS is adjusted. The resonant frequency of the first loop is offset. Therefore, the resonant frequency of the first loop is not equal to the frequency of the first wireless electric energy PW1.

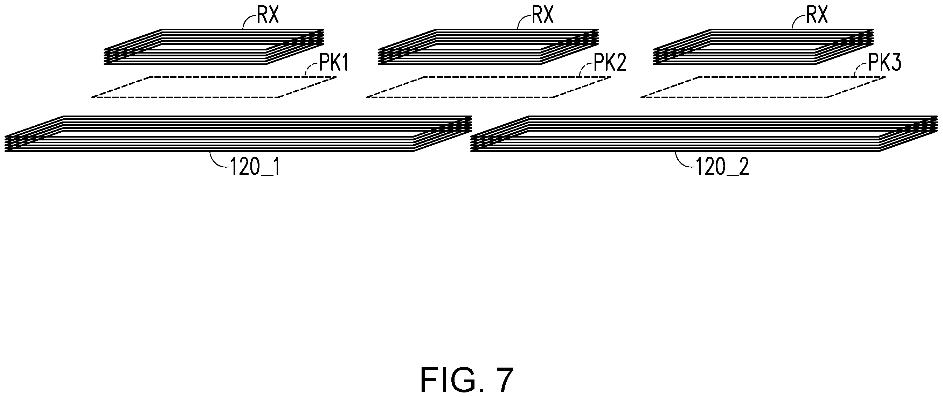

Referring to both FIGs. 2 and 7, FIG. 7 is a schematic diagram of a vehicle coil and a transmission coil according to an embodiment of the disclosure. In this embodiment, when the electric auxiliary vehicle EV stops at the parking position PK1, the vehicle coil RX of the electric auxiliary vehicle EV is located in a wireless transmission range of the transmission coil 120_1. When the electric auxiliary vehicle EV stops at the parking position PK2, the vehicle coil RX of the electric auxiliary vehicle EV is located in the wireless transmission range of the transmission coil 120_1. The electric auxiliary vehicle EV may use the first wireless electric energy PW1 for charging and/or use the coupled electric energy PWC to enhance the power of the first wireless electric energy PW1.

When the electric auxiliary vehicle EV stops at the parking position PK2, the vehicle coil RX is located in wireless transmission ranges of the transmission coils 120_1 and 120_2. The vehicle coil RX may be used as a relay induction coil between the transmission coils 120_1 and 120_2. Therefore, the transmission coil 120_2 may use the coupled electric energy PWC to transmit the second wireless electric energy PW2 to the parking position PK3 in the wireless transmission manner. The electric auxiliary vehicle EV may also use the first wireless electric energy PW1 for charging.

In addition, when the electric auxiliary vehicle EV stops at the parking position PK3, the vehicle coil RX of the electric auxiliary vehicle EV is located in the wireless transmission range of the transmission coil 120_2. Upon receiving the second wireless electric energy PW2, the electric auxiliary vehicle EV may use the second wireless electric energy PW2 for charging and/or use the coupled electric energy PWC to enhance the power of the second wireless electric energy PW2.

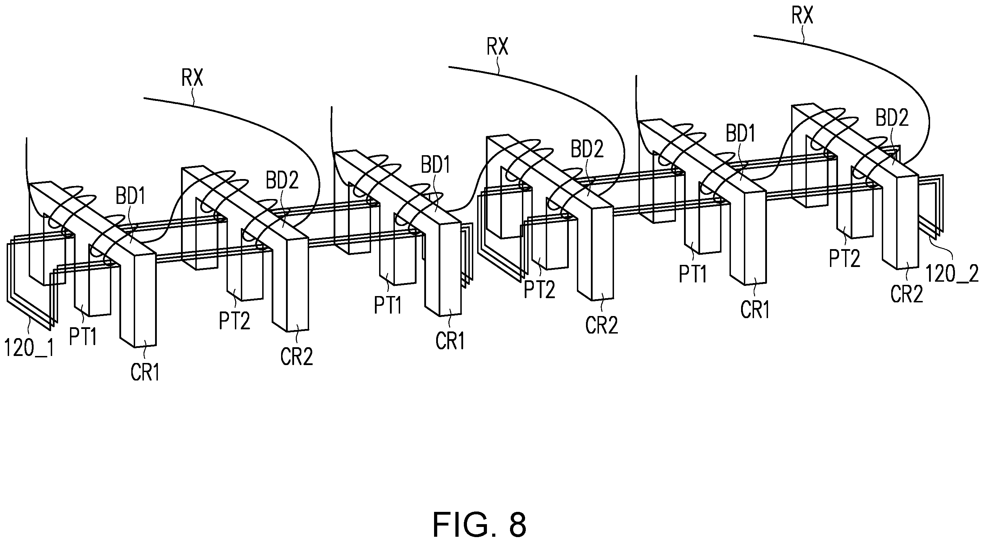

Referring to both FIGs. 2 and 8, FIG. 8 is a schematic diagram of a vehicle coil and a transmission coil according to an embodiment of the disclosure. In this embodiment, the vehicle coil circuit CC of the electric auxiliary vehicle EV includes the vehicle coil RX and iron cores CR1 and CR2. The iron cores CR1 and CR2 are used to transmit magnetic flux respectively. The iron core CR1 has a protrusion portion PT1 and a body BD1. The iron core CR2 has a protrusion portion PT2 and a body BD2. The vehicle coil RX is wound around the bodies BD1 and BD2.

In this embodiment, the transmission coils 120_1 and 120_2 are formed into track coils, for example. When the electric auxiliary vehicle EV stops at the parking position PK1 as shown in FIG. 2, the transmission coil 120_1 at least partially surrounds the protrusion portions PT1 and PT2. The protrusion portions PT1 and PT2 generate the magnetic flux according to the first wireless electric energy PW1 and transmit the magnetic flux to the bodies BD1 and BD2. Therefore, the vehicle coil RX receives the first wireless electric energy PW1 based on the magnetic flux. The electric auxiliary vehicle EV may use the first wireless electric energy PW1 for charging and/or use the coupled electric energy PWC to enhance the power of the first wireless electric energy PW1.

When the electric auxiliary vehicle EV stops at the parking position PK2 as shown in FIG. 2, the transmission coil 120_1 at least partially surrounds the protrusion portion PT1. The transmission coil 120_2 at least partially surrounds the protrusion portion PT2. Therefore, the vehicle coil RX may be used as the relay induction coil between the transmission coils 120_1 and 120_2. The protrusion portion PT1 generates the magnetic flux according to the first wireless electric energy PW1 and transmits the magnetic flux to the body BD1. Therefore, the vehicle coil RX receives the first wireless electric energy PW1 based on the magnetic flux. The body BD2 generates the magnetic flux according to the first wireless electric energy PW1 and transmits the magnetic flux to the protrusion portion PT2. Therefore, the transmission coil 120_2 receives the coupled electric energy PWC corresponding to the first wireless electric energy PW1 based on the magnetic flux. In addition, the electric auxiliary vehicle EV may also use the first wireless electric energy PW1 for charging.

In addition, when the electric auxiliary vehicle EV stops at the parking position PK3 as shown in FIG. 2, the transmission coil 120_2 at least partially surrounds the protrusion portions PT1 and PT2. The protrusion portions PT1 and PT2 generate the magnetic flux and transmit the magnetic flux to the bodies BD1 and BD2. Upon receiving the second wireless electric energy PW2, the electric auxiliary vehicle EV may use the second wireless electric energy PW2 for charging and/or use the coupled electric energy PWC to enhance the power of the second wireless electric energy PW2.

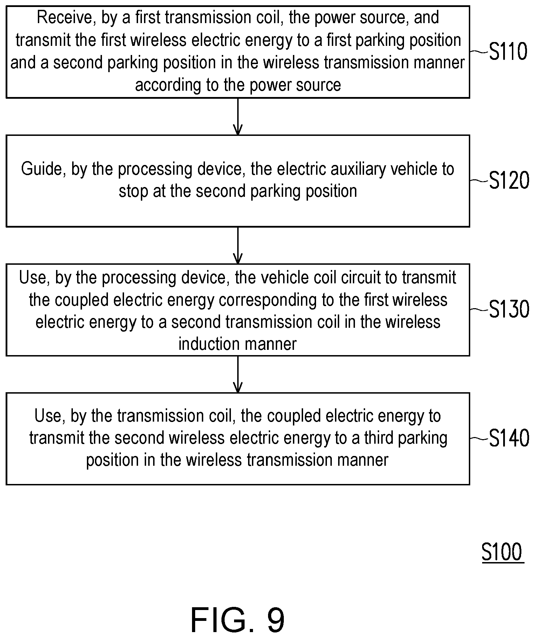

Referring to both FIGs. 2 and 9, FIG. 9 is a flow chart of an operating method according to an embodiment of the disclosure. In this embodiment, an operating method S100 is suitable for the wireless charging system 100. The operating method S100 includes steps S110 to S140. In step S110, the transmission coil 120_1 (i.e., a first transmission coil) receives the power source PP, and transmits the first wireless electric energy PW1 to the parking position PK1 (i.e., a first parking position) and the parking position PK2 (i.e., a second parking position) in the wireless transmission manner according to the power source PP. In step S120, the processing device 130 guides the electric auxiliary vehicle EV to stop at the parking position PK2. In step S130, the processing device 130 controls the electric auxiliary vehicle EV, so as to use the vehicle coil circuit CC to transmit the coupled electric energy PWC corresponding to the first wireless electric energy PW1 to the transmission coil 120_2 (i.e., a second transmission coil) in the wireless induction manner. In step S140, the transmission coil 120_2 uses the coupled electric energy PWC to transmit the second wireless electric energy PW2 to the parking position PK3 (i.e., a third parking position) in the wireless transmission manner. Implementation details of steps S110 to S140 have been clearly described in the embodiments of FIGs. 1 to 8. Therefore, the same details will not be repeated in the following.

Based on the above, the wireless charging system may use the vehicle coil circuit in the electric auxiliary vehicle to receive the first wireless electric energy, and transmit the coupled electric energy corresponding to the first wireless electric energy to the second transmission coil. Therefore, the second transmission coil may use the coupled electric energy to the second wireless electric energy to the third parking position in the wireless transmission manner. In this way, when the electric auxiliary vehicle stops at the second parking position, the wireless charging system may use one single power source to provide the wireless electric energies corresponding to the parking positions in different transmission coils.

## Claims

1. A wireless charging system (10, 100), comprising:
a power supply device (11_1-11_3, 110, 210) configured to provide a power source (PP, PP1-PP3);
a first transmission coil electrically connected to the power supply device (11_1-11_3, 110, 210) and configured to transmit a first wireless electric energy (PW1) to a first parking position and a second parking position in a wireless transmission manner according to the power source (PP, PP1-PP3);
a second transmission coil;
an electric auxiliary vehicle (EV, EV1-EV9) comprising a vehicle coil circuit (CC); and
a processing device (130) configured to communicate with the electric auxiliary vehicle (EV, EV1-EV9) to guide the electric auxiliary vehicle (EV, EV1-EV9) to stop at the second parking position, and use the vehicle coil circuit (CC) to transmit a coupled electric energy (PWC, PWC1, PWC2) corresponding to the first wireless electric energy (PW1) to the second transmission coil in a wireless induction manner, so that the second transmission coil uses the coupled electric energy (PWC, PWC1, PWC2) to transmit a second wireless electric energy (PW2) to a third parking position in the wireless transmission manner.

2. The wireless charging system (10, 100) according to claim 1, wherein the processing device (130) communicates with the electric auxiliary vehicle (EV, EV1-EV9) to receive a battery power (VB) of the electric auxiliary vehicle (EV, EV1-EV9), and determines a parking position of the electric auxiliary vehicle (EV, EV1-EV9) according to the battery power (VB).

3. The wireless charging system (10, 100) according to claim 1, wherein
the electric auxiliary vehicle (EV, EV1-EV9) further comprises an energy storage battery (BT),
the vehicle coil circuit (CC) comprises:
a vehicle coil (RX) configured to receive the first wireless electric energy (PW1);
a resonance circuit (RC, 212) electrically connected to the vehicle coil (RX); and
a conversion circuit (TC) electrically connected to the resonance circuit (RC, 212) and the energy storage battery (BT), and configured to receive the first wireless electric energy (PW1) through the vehicle coil (RX) in a charging mode (MD1), convert the first wireless electric energy (PW1) into a battery electric energy, and charge the energy storage battery (BT) according to a battery power (VB).

4. The wireless charging system (10, 100) according to claim 3, wherein in the charging mode (MD1), the resonance circuit (RC, 212) and the vehicle coil (RX) jointly form a first loop.

5. The wireless charging system (10, 100) according to claim 4, wherein in an enhanced coupling mode (MD2), the resonance circuit (RC, 212) and the vehicle coil (RX) jointly form a second loop.

6. The wireless charging system (10, 100) according to claim 5, wherein in the enhanced coupling mode (MD2), power of the first wireless electric energy (PW1) is enhanced.

7. The wireless charging system (10, 100) according to claim 5, wherein the resonance circuit (RC, 212) comprises:
a variable capacitor (CS), wherein a first end of the variable capacitor (CS) is electrically connected to a first end of the vehicle coil (RX);
a switch (SW), wherein a first end of the switch (SW) is electrically connected to a second end of the variable capacitor (CS), and a second end of the switch (SW) is electrically connected to the conversion circuit (TC); and
a capacitor (CP) electrically connected between the second end of the variable capacitor (CS) and a second end of the vehicle coil (RX).

8. The wireless charging system (10, 100) according to claim 7, wherein the processing device (130) communicates with the electric auxiliary vehicle (EV, EV1-EV9) to receive the battery power (VB) of the electric auxiliary vehicle (EV, EV1-EV9), and controls the electric auxiliary vehicle (EV, EV1-EV9) to perform one of the charging mode (MD1), the enhanced coupling mode (MD2), and a charging and enhanced coupling mode (MD3) according to the battery power (VB).

9. The wireless charging system (10, 100) according to claim 5, wherein the resonance circuit (RC, 212) comprises:
a variable capacitor (CS), wherein a first end of the variable capacitor (CS) is electrically connected to a first end of the vehicle coil (RX), and a second end of the variable capacitor (CS) is electrically connected to the conversion circuit (TC); and
a switch (SW), wherein a first end of the switch (SW) is electrically connected to the second end of the variable capacitor (CS), and a second end of the switch (SW) is electrically connected to a second end of the vehicle coil (RX).

10. The wireless charging system (10, 100) according to claim 3, wherein
when the electric auxiliary vehicle (EV, EV1-EV9) stops at the first parking position, the vehicle coil (RX) is in a wireless transmission range of the first transmission coil;
when the electric auxiliary vehicle (EV, EV1-EV9) stops at the second parking position, the vehicle coil (RX) is in the wireless transmission range of the first transmission coil and a wireless transmission range of the second transmission coil;
the wireless transmission range of the first transmission coil does not overlap the wireless transmission range of the second transmission coil, and
when the electric auxiliary vehicle (EV, EV1-EV9) stops at the third parking position, the vehicle coil (RX) is in the wireless transmission range of the second transmission coil.

11. The wireless charging system (10, 100) according to claim 3, wherein the vehicle coil circuit (CC) further comprises:
a first iron core having a first protrusion portion and a first body; and
a second iron core having a second protrusion portion and a second body,
wherein the vehicle coil (RX) is wound around the first body and the second body,
wherein when the electric auxiliary vehicle (EV, EV1-EV9) stops at the first parking position, the first transmission coil at least partially surrounds the first protrusion portion and the second protrusion portion,
wherein when the electric auxiliary vehicle (EV, EV1-EV9) stops at the second parking position, the first transmission coil at least partially surrounds the first protrusion portion, the second transmission coil at least partially surrounds the second protrusion portion, and
wherein when the electric auxiliary vehicle (EV, EV1-EV9) stops at the third parking position, the second transmission coil at least partially surrounds the first protrusion portion and the second protrusion portion.

12. An operating method (S100) for a wireless charging system (10, 100), wherein the wireless charging system (10, 100) comprises a first transmission coil, a second transmission coil, an electric auxiliary vehicle (EV, EV1-EV9), and a processing device (130), the electric auxiliary vehicle (EV, EV1-EV9) comprises a vehicle coil circuit (CC), and the operating method (S100) comprises:
receiving, by the first transmission coil, a power source (PP, PP1-PP3), and transmitting a first wireless electric energy (PW1) to a first parking position and a second parking position in a wireless transmission manner according to the power source (PP, PP1-PP3);
guiding, by the processing device (130), the electric auxiliary vehicle (EV, EV1-EV9) to stop at the second parking position;
using, by the processing device (130), the vehicle coil circuit (CC) to transmit a coupled electric energy (PWC, PWC1, PWC2) corresponding to the first wireless electric energy (PW1) to the second transmission coil in a wireless induction manner; and
using, by the second transmission coil, the coupled electric energy (PWC, PWC1, PWC2) to transmit a second wireless electric energy (PW2) to a third parking position in the wireless transmission manner.

13. The operating method (S100) according to claim 17, wherein the electric auxiliary vehicle (EV, EV1-EV9) further comprises an energy storage battery (BT), the vehicle coil circuit (CC) comprises a vehicle coil (RX) and a resonance circuit (RC, 212), and the operating method (S100) further comprises:
in a charging mode (MD1), controlling, by the processing device (130), the resonance circuit (RC, 212) and the vehicle coil (RX) to jointly form a first loop,
wherein a resonant frequency of the first loop is equal to a frequency of the first wireless electric energy (PW1).

14. The operating method (S100) according to claim 18, wherein the operating method (S100) further comprises:
in an enhanced coupling mode (MD2), controlling, by the processing device (130), the resonance circuit (RC, 212) and the vehicle coil (RX) jointly form a second loop,
wherein a resonant frequency of the second loop is equal to the frequency of the first wireless electric energy (PW1).

15. The operating method (S100) according to claim 18, wherein the operating method (S100) further comprises:
in a charging and enhanced coupling mode (MD3), adjusting, by the processing device (130), the resonant frequency of the first loop to not be equal to the frequency of the first wireless electric energy (PW1).
